# EUROPEAN PATENT APPLICATION

(11) **EP 2 151 793 A1**
(43) Date of publication of application: **10.02.2010**
(21) Application number: 09167329.3
(22) Date of filing: 06.08.2009
(51) Int. Cl.: G06Q 10/00, G06Q 30/00

(54) **Method for compiling a series of weighted areas of interest of a user of a plurality of social computer networks, and system therefor**

(30) Priority: 07.08.2008 NL 2001879
(71) Applicant: A. Stroeve Beheer B.V., 8331 TV Steenwijk (NL)
(72) Inventor: Stroeve, Arjan, 8338 LB Willemsoord (NL)
(74) Representative: van Oeffelt, Abraham

(57) **Abstract**

Method, software program and system for compiling a series of weighted areas of interest of a user of a plurality of social computer networks, for the purpose of recommending to the user events within his/her area of interest, comprising of reading at least a first personal area of interest from a personal profile of a first social computer network, reading at least a second personal area of interest from a personal profile of a second social computer network, forming a compiled personal profile by storing the read personal areas of interest under a shared ID in a database, assigning a subject from a predetermined limitative list of subjects to a stored personal area of interest, determining the relative frequency of each subject within the personal data of an ID, and recording per ID the value of the relative frequency of all areas of interest in a series, for the purpose of thus obtaining a series of weighted areas of interest.

## Description

The present invention relates to a method for compiling a series of weighted areas of interest of a user of a plurality of social computer networks, for the purpose of recommending to the user events within his/her area of interest. The invention further relates to a system for performing this method.

A diversity of social computer networks are known. Hyves and Facebook provide on a personal page the possibility of placing a photograph, of including references to pages of friends and acquaintances, and the possibility of leaving a message on a site of a friend or acquaintance. Linked-in provides the possibility of storing (a history of) work related data. "Schoolbank" provides the possibility of registering a school, class and school year, in order to thus make contact with old classmates, and Last.fm provides a possibility of registering musical preferences. In addition, personal websites and sites such as Flickr and Youtube provide the possibility of showing personal interests.

A drawback of the known networks is that they are focus mainly on forming as large a list of contacts as possible, but that, apart from this objective, they offer no added value. While the sites can be maintained, and new friends and acquaintances can be added, the incentive to do so is formed by encounters in daily life, and there is no concrete benefit for the user, apart from forming a list of contacts. Although social computer networks nowadays provide programmable environments (for instance the open API of Facebook and Open Social of Google) in which applications for use within the friends network can be programmed, the users become saturated and after a period of time are less active on the social network.

A second drawback of the known social computer networks is that users feel a need to show who they are, but none of the existing networks provides the possibility of sharing with contacts a complete picture of his or her personality. This encourages users to join a plurality of social computer networks, and to have a part of the picture formed on each of these social networks.

Although there are services for collecting the data from existing networks at one location, such as www.jaiku.com or www.plaxo.com, these services provide only a summary list of activities on the internet for friends or acquaintances, without providing further added value.

It is therefore an object of the present invention to provide a method and system which serve at least one of the following purposes, or provides further advantage compared to the existing social networks:
- To have and maintain usefulness for its users by providing relevant content.
- To enable the user to share his/her 'complete online identity' with precisely those people among his/her contacts which he/she selects for this purpose.
- To offer the visitors an endless source of entertainment by providing a very large amount of content (all information which can be found on other networks in one location).
- To provide the user with a tool which makes it possible to manage all profiles from one location.

The invention provides for this purpose a method for compiling a series of weighted areas of interest of a user of a plurality of social computer networks, for making a recommendation to the user within his/her area of interest, comprising of reading at least a first personal area of interest from a personal profile of at least a first social computer network, forming a compiled personal profile by storing the read personal areas of interest under a shared ID in a database, assigning a subject from a predetermined limitative list of subjects to a stored personal area of interest, determining the relative frequency of each subject within the personal data of an ID, and recording per ID the value of the relative frequency of all areas of interest in a series, for the purpose of thus obtaining a series of weighted areas of interest.

By collecting data from at least one social computer network, and preferably a plurality of or even all data on all social computer networks of a user, the most complete possible personal profile is obtained, in that data from different sites complement each other. The collecting can take place here in that the user provides an overview of the social computer networks on which he/she has created a profile and consents to the data of the profile being read. To this end he/she can for instance provide a user name and a password associated with each of the profiles, after which a search engine gains access to the databases of the various websites. In one embodiment the collecting of the data can take place here with a software program, and wherein the series of weighted areas of interest is stored in a database, which is preferably accessible via the internet.

The method according to the present invention can further comprise linking personal data of the user to the ID. These personal data can be copied from one of the profiles of the social computer networks, or be provided by the user, for instance by means of an input screen of an application adapted for the compiling of the series of weighted areas of interest.

In a further embodiment the method comprises of the user editing the series of weighted areas of interest. In this way the user can modify the series of weighted areas of interest if the data from the social computer networks are incomplete, obsolete or otherwise incorrect. After compiling a series of weighted areas of interest the user can however also copy data or a file, such as a photo file, to a personal profile of a social network in order to update this profile.

A list of subjects found suitable for classifying personal areas of interest are: hobbies, music, sport, travel, school, work, entertainment, lifestyle. The mutual relationships between these subjects provide a series of weighted areas of interest which provide an exceptionally great distinguishing character between diverse users.

An even better distinguishing character can be obtained when, on the basis of a predetermined classification, a category and optionally also one or more subcategories are assigned to a stored personal area of interest. When a user has indicated on the site of Last.fm that he/she is a fan of U2, "U2" is recorded in the category "music" and in an associated category "rock" and in an associated subcategory "pop-rock".

The stored series of weighted areas of interest can thus be utilized by recording recommendations in a database, linking to a recommendation at least one subject from the predetermined limitative list of subjects and making a recommendation to a user in an area, the subject of which corresponds to a subject which has a relative frequency lying above a threshold value within the weighted series of areas of interest of the user.

The recommendations can for instance comprise an impending event, a concert or film to be visited, a CD or book that has come out, a theatre performance, a trade fair, a symposium or a vacancy. A category and optionally one or more subcategories can also be assigned to these recommendations on the basis of a predetermined classification, for the purpose of making a recommendation to a user, the category of which corresponds to a category within the weighted area of interest series of the user.

In order to enable even better tailoring of the recommendations to the series of weighted areas of interest of a user, synonyms of a category or a subcategory can be recorded in the database for the purpose of making a recommendation to the user in an area, the category or subcategory of which corresponds to a respective category or subcategory which is a synonym of a respective category or subcategory of an area of interest of the user. Also ensured in this manner is that different nomenclature and qualifications of areas of interest within different contact networks do not result in recommendations being lost because their qualification does not literally correspond to those in the database.

In a further embodiment users can be given the opportunity to add recommendations to the database. They can also be given the opportunity here to store at least one category and at least one subcategory. In addition, it is possible to group determined recommendations. This can be done by making a link during input of the recommendation to one or more other recommendations. The classification of the other recommendation is herein adopted.

Information about recommendations can also be copied from at least one external website, for instance using a so-called spider.

After the user has received a recommendation, he/she can store an assessment or evaluation thereof in the database. The sending of recommendations can be further modified on the basis of these assessments, thus enabling the sending of recommendations which are tailored even better to the user. Such a feedback can for instance result in the category or subcategory of a recommendation being added or modified, or a synonym thereof being recorded.

Making recommendations can further take place on the basis of a geographical location and a point in time. A user then for instance receives recommendations for things which are taking place or are for sale or can be seen in his/her neighbourhood.

In addition, only publicly accessible information is recommended to users.

The invention will now be elucidated on the basis of the following non-limitative figure, which shows a schematic representation of a system for performing the method according to the present invention.

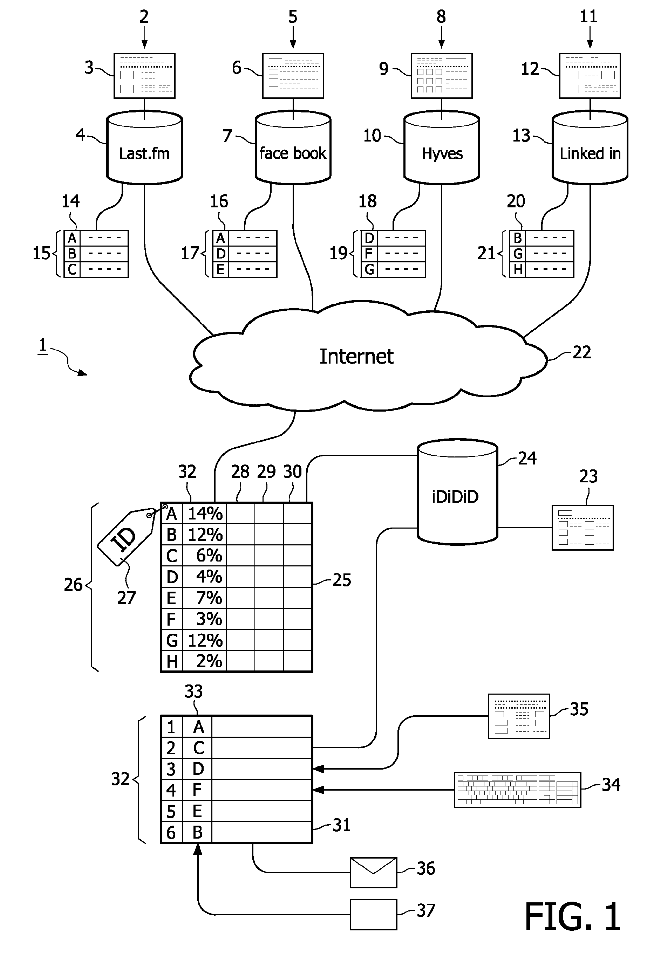

Figure 1 shows a system 1 for performing the method according to the present invention. The system comprises a first social computer network 2, comprising a first website 3 and a database 4, a second social computer network 5, comprising a second website 6 and a second database 7, a third social network 8 having a third website 9 and a third database 10, and a fourth social network 11 having a fourth website 12 and a fourth database 13. Users can create a profile on each of the social computer networks and there enter personal data such as their areas of interest. In this example a user has created a first profile 14 which is recorded in first database 4. The profile comprises a number of data 15, which may designate name and as address data as well as interests. The data from first profile 14 are referred to schematically as A, B and C. In second database 7 a second profile 16 is created which comprises a number of data 16, which may designate personal data and personal interests. The data, designated schematically A, D, E, only partially (A) overlap with the data from the first profile. In a similar manner a third profile 18 is created with personal data 19, designated schematically D, F, G, and a fourth profile 20, with personal data 21, designated schematically B, G, H.

The various profiles 14, 16, 18, 20 can be read via the internet 22. Website 23, which is adapted to perform a method according to the present invention, provides for this purpose the option of reading profiles from the social computer networks 2, 5, 8 and 11. For this purpose a user must enter possible log-on data, such as a user name and a password, with which he/she can gain access to websites 4, 7, 10 and 13.

A database 24 coupled to website 23 is adapted to store therein a compiled profile 25 for a user with an ID 27. In this example the compiled profile comprises the personal data A, B, C, D, E, F, G, H, wherein within the profile the relative frequency for each personal area of interest within the found profiles is indicated in a column 32. A series of weighted areas of interest is thus created. For each area of interest a subject is designated in a column 28, a category in a column 29, and a subcategory in column 30.

Database 24 further comprises data 31 for recommendations. Of the stored recommendations 32 at least one subject at a time is designated in the database in a column 33, on the basis of which the recommendation can be made to a user. A category and a subcategory are preferably also recorded. The recommendations can be recorded by means of manual input 34, which can be entered by a user or an administrator of website 23, or can be obtained from an external website 35.

On the basis of the classification of the recommendations into subject, category and sub-category, the recommendations can be sent 36 to a user, for instance via email, or when the user accesses the website and logs onto it. The user can then give a rating 37 to the recommendations 32, on the basis of which the classification of the recommendation can be modified if necessary.

Classification of the recommendations for instance takes place here in accordance with an algorithm which makes use of the following data:
- Country: the country is of importance for determined information (for instance an event). A user living in Steenwijk who is fan of the pop band U2 will probably not want to be informed about a U2 concert in New York, since he/she will not be able to attend this concert because of the distance;
- Date: is important in respect of events; only future events are recommended;
- Personal or Public: Only information which is publicly accessible is recommended;
- Personal interests: when the system according to the present invention knows that a user is a U2 fan (for instance because he/she listens to them regularly on Last.fm), a U2 event will yield a 100% recommendation.
- Further interests of other users with the same interest in U2. From a comparison of series of weighted areas of interest of different users it can for instance be inferred that: 'users who like U2 also like Coldplay'.
- Status of the location: many events take place at a location, such as a catering establishment, events centre, sports field, stadium and so on. The more events take place at a particular location and the higher the rating of these events by users, the higher the status of this location becomes. The status of the location then becomes an indication for the 'entertainment value' of the event.
- Province/Place: when there are no recommendations which fall 100% within the personal interest of a user, events in the place of residence of the user will then always be deemed more relevant than events elsewhere.

## Claims

1. Method for compiling a series of weighted areas of interest of a user of a plurality of social computer networks, for the purpose of recommending to the user events within his/her area of interest, comprising of:
- reading at least a first personal area of interest from a personal profile of at least a first social computer network;
- forming a compiled personal profile by storing the at least one read personal area of interest under a shared ID in a database;
- assigning a subject from a predetermined limitative list of subjects, such as hobbies, music, sport, travel, school, work, entertainment, lifestyle, to a stored personal area of interest;
- determining the relative frequency of each subject within the personal data of an ID;
- recording per ID the value of the relative frequency of all areas of interest in a series, for the purpose of thus obtaining a series of weighted areas of interest;
- linking personal data of the user to the ID; and
- the user editing the series of weighted areas of interest.

2. Method as claimed in claim 1, comprising of the user copying data or a file to a personal profile of a social network.

3. Method as claimed in any of the foregoing claims, comprising of:
- assigning a category to a stored personal area of interest on the basis of a predetermined classification.

4. Method as claimed in claim 3, comprising of:
- assigning at least one subcategory to a stored personal area of interest on the basis of the predetermined classification.

5. Method as claimed in any of the foregoing claims, comprising of:
- recording recommendations in a database;
- linking to a recommendation at least one subject from the predetermined limitative list of subjects;
- making a recommendation to a user, such as a recommendation from the group of: an event, a concert, a film, a CD, a book, a theatre performance, a trade fair, a symposium, a vacancy, a book in an area of which the subject corresponds to a subject which has a relative frequency lying above a threshold value within the series of weighted areas of interest of the user.

6. Method as claimed in claim 5, further comprising of assigning a category to an event on the basis of a predetermined classification, for the purpose of making a recommendation to a user, the category of which corresponds to a category within the series of weighted areas of interest of the user.

7. Method as claimed in claim 6, further comprising of assigning a subcategory to a recommendation on the basis of a predetermined classification, for the purpose of making a recommendation to a user, the category of which corresponds to a subcategory within the series of weighted areas of interest of the user.

8. Method as claimed in either of the claims 6 or 7, comprising of recording synonyms of a category or a subcategory in a database for the purpose of making a recommendation to a user in an area, the category or subcategory of which corresponds to a respective category or subcategory which is a synonym of a respective category or subcategory of the series of weighted areas of interest of the user.

9. Method as claimed in any of the claims 6-8, comprising of a user adding information for recommendations to the database.

10. Method as claimed in any of the claims 6-9, comprising of copying information about impending events from at least one external website.

11. Method as claimed in any of the claims 6-10, comprising of a user storing an assessment of a recommended event in the database.

12. Method as claimed in claim 11, comprising of changing the category or subcategory of a recommendation on the basis of a feedback.

13. Method as claimed in any of the claims 8-12, wherein recommendation further takes place on the basis of a geographical location and a point in time.

14. Software program adapted to perform the method as claimed in any of the foregoing claims.

15. Computer system adapted to execute the software program as claimed in claim 14.
